## Europäisches Patentamt
## European Patent Office
## Office européen des brevets

(11) Publication number : **0 279 608 B1**

## (12) EUROPEAN PATENT SPECIFICATION

(45) Date of publication of patent specification :
**23.11.94 Bulletin 94/47**

(51) Int. Cl.⁵ : **H04N 7/173**

(21) Application number : **88301222.1**

(22) Date of filing : **15.02.88**

(54) **Two way communication systems.**

(30) Priority : **17.02.87 JP 33945/87**
**26.02.87 JP 43437/87**
**26.02.87 JP 43438/87**

(43) Date of publication of application :
**24.08.88 Bulletin 88/34**

(45) Publication of the grant of the patent :
**23.11.94 Bulletin 94/47**

(84) Designated Contracting States :
**AT DE ES FR GB IT NL**

(56) References cited :
**GB-A- 2 168 880**
**US-A- 4 343 042**
**US-A- 4 584 603**
**US-A- 4 586 078**

(56) References cited :
**IEEE JOURNAL ON SELECTED AREAS IN**
**COMMUNICATIONS, vol. SAC-3, no. 2, March**
**1985, pages 273-285, New York, US; M.B.**
**AKGUN et al.: "The development of cable**
**data communications standards"**
**IDEM**

(73) Proprietor : **SONY CORPORATION**
**7-35 Kitashinagawa 6-chome**
**Shinagawa-ku**
**Tokyo 141 (JP)**

(72) Inventor : **Toyoshima, Masakatsu c/o Patents**
**Division**
**Sony Corporation**
**6-7-35 Kitashinagawa**
**Shinagawa-ku Tokyo 141 (JP)**

(74) Representative : **Pilch, Adam John Michael et**
**al**
**D. YOUNG & CO.,**
**21 New Fetter Lane**
**London EC4A 1DA (GB)**

EP 0 279 608 B1

## Description

This invention relates to two way communication systems suitable for transmitting information signals between a central control unit and a number of terminals.

Provision of an individual video display for each of the passenger seats in a passenger vehicle such as an aircraft has been proposed in US Patent US-A-4 584 603. In that proposed system,the passenger seats are provided with video displays, and a control apparatus supplies a plurality of video signals in parallel to each display. The video display at each passenger seat can be made to select one of the video signals and to display the selected video signal.

In the system proposed in US-A-4 584 603, each signal supplied to the video displays is transmitted through respective independent transmitting lines (one for each video display) to the respective video displays. In order to transmit many signals to each display, many transmission lines are required for each display. As a result, the system wiring is very complicated, and the arrangement of the overall system is also very complicated. If such a system were to be modified so as to be capable of two way communication, so that, for example, each of the video display units could transmit information to the control apparatus, even more transmission lines would be required, so that the system would become even more complicated. It would be virtually impossible to wire these transmission lines in a large aircraft such as one having more than 500 seats.

US Patent US-A-4 586 078 discloses a cable television system in which upstream data communication is provided at frequencies displaced from downstream carrier signal harmonics thereby avoiding cross- and intermodulation products arising from cable discontinuities. Two upstream data channels are provided by two harmonically-related carriers generated by a single signal source.

According to the present invention there is provided a two way communication system comprising:

a head end apparatus comprising means for generating a polling command signal, and means for receiving a polling answer signal;

a plurality of terminal units each comprising means for generating said polling answer signal in response to said polling command signal, and means for generating a random access signal; and

means for sending in first and second channels each said polling answer signal and each said random access signal to the head end apparatus, and for sending said polling command signal from the head end apparatus to each terminal unit;

characterised in that:

each of said terminal units includes means for decoding said polling command signal; and

said sending means is responsive to said polling command signal decoding means to send each said polling answer signal in said first channel and at least one said random access signal in said second channel when said polling command signal is supplied to said decoding means, and to send at least one said random access signal in said first channel and at least another said random access signal in said second channel when said polling command signal is not supplied to said decoding means.

A preferred embodiment of the present invention, to be described in greater detail hereinafter, alleviates the problem outlined above by providing a two way communication system capable of transmitting a large number of information signals in two directions without complicated wiring, such as to be suitable for use in a passenger vehicle such as an aircraft.

The invention will now be described by way of example with reference to the accompanying drawings, throughout which like parts are referred to by like references, and in which:

Figure 1 is a circuit block diagram showing the overall arrangement of a two way communication system according to an embodiment of the present invention;

Figure 2 is a plan view showing a panel of a selection and display apparatus forming part of Figure 1;

Figure 3 is a view of two units of the selection and display apparatus shown in Figure 2, each mounted on a passenger seat;

Figure 4 is a circuit block diagram showing a main portion of a terminal unit shown in Figure 1;

Figure 5 is a circuit block diagram showing the construction of a transmitter of the terminal unit forming part of Figure 1;

Figure 6 is a circuit block diagram showing the construction of an oscillator shown in Figure 5;

Figure 7 is a diagram showing particular carrier frequencies;

Figure 8 is a flowchart showing the operation of the communication system in a random access transmission mode;

Figure 9 is a circuit block diagram of a terminal unit according to a preferred embodiment of the invention;

Figure 10 is a flowchart showing the operation of the system shown in Figure 9 in its random access transmission mode; and

Figure 11 is a perspective view of the interior of an aircraft equipped with the preferred embodiment of the

EP 0 279 608 B1

invention.

Two way communication systems according to the present invention will now be described with reference to the drawings. In a preferred embodiment, the system is capable of transmitting video signals, audio signals and other signals.

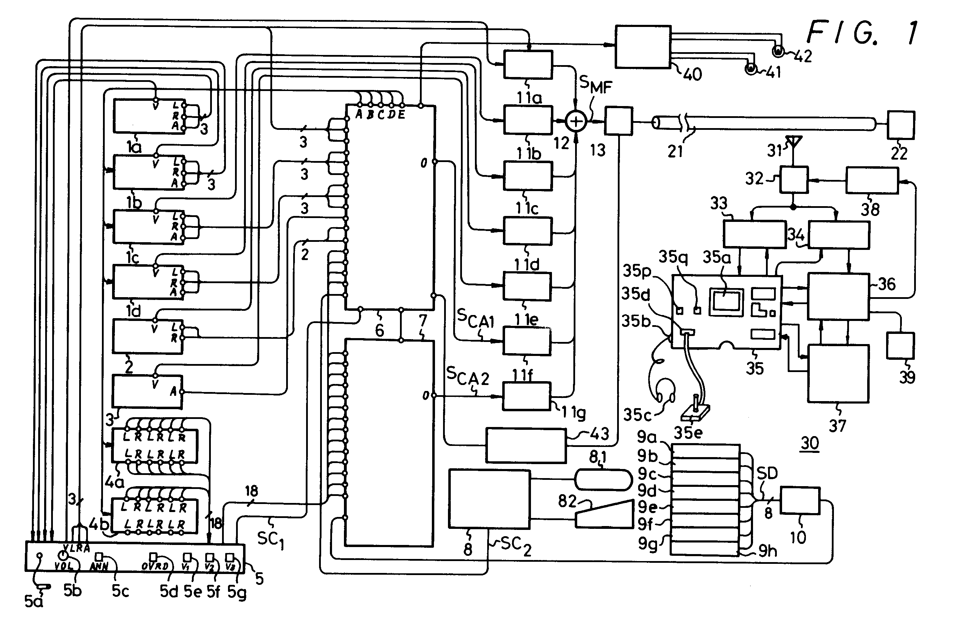

The "transmitting side" (also referred to as the "central control portion", "central control unit" or "head end apparatus") of the system will first be described with reference to Figure 1.

Referring to Figure 1, video tape recorders (VTRs) 1a to 1d are provided in the transmitting side which may, for example, be located in an aircraft crew's compartment. The VTR 1a is used for an override operation and may be loaded with a cassette tape explaining, for example, how to put on a life-jacket. Each of the VTRs 1b to 1d is loaded with a cassette tape of a video programme such as a film. Each of the VTRs 1a to 1d is provided with a terminal V for outputting a reproduced video signal and with terminals L, R and A for outputting reproduced audio signals. In an embodiment in which the VTRs 1a to 1d store bi-lingual programmes, the terminals L and R are respectively used for outputting left-channel and right-channel stereo audio signals in a first language, and the terminal A is used for outputting a monaural audio signal in a second language.

A television tuner 2 is provided with a terminal V for outputting a video signal and terminals L and R for outputting respectively the left and right channels of an audio signal.

Still picture reproducing apparatus 3 is capable of reproducing still picture information recorded on a compact disc (CD) read only memory (ROM), the information typically comprising maps, an airport guided drawing, or the like. The still picture reproducing apparatus 3 is provided with a terminal V for outputting a video signal representative of a still picture and a terminal A for outputting an audio signal associated with the still picture.

Audio reproducing apparatus 4a and 4b each include three sets of compact disc players and tape recorders. The audio reproducing apparatus 4a, 4b are each respectively provided with six pairs of terminals L and R for outputting left channel and right channel audio signals.

A controller 5 comprises a microphone 5a, a volume control 5b for adjusting the level of an audio signal received by the microphone 5a, an announce key 5c, an override key 5d and pause keys 5e to 5g for setting the VTRs 1b to 1d into a pause mode. Video signals from the respective terminals V of the VTRs 1a, 1b and audio signals from the respective terminals L, R and A of these recorders are supplied to the controller 5. The controller 5 is provided with a terminal V for outputting a video signal and terminals L, R and A for outputting audio signals. Usually, the terminals V, L, R and A of the controller 5 output the video signal supplied from the terminal V of the VTR 1b and the audio signals supplied from the terminals L, R and A of the VTR 1b. However, when the override key 5d is pressed to trigger an override operation, the terminals V, L, R and A of the controller 5 output the video signal supplied from the terminal V of the VTR 1a and the audio signals supplied from the terminals L, R and A of the VTR 1a. When the announce key 5c is pressed to initiate an announce operation, an audio signal from the microphone 5a is delivered to the output terminal A of the controller 5.

The system also includes CADA encoders 6 and 7 which are of the type used in the so-called cable digital audio/data transmission system (CADA system), for example as disclosed in US Patent No. US-A-4 684 981. The CADA encoders 6, 7 are capable of time-division-multiplexing a plurality of digital audio and data signals and transmitting the multiplexed signals over a vacant one channel band width (6 MHz) of a cable television (CATV) system, thus transmitting signals such as music with high efficiency and without degrading their quality. Each of the CADA encoders 6 and 7 is provided with an A/D (analog-to-digital) converter and a shift register (not shown). The time-division-multiplexing operation is carried out by converting a plurality of audio signals into digital signals in the A/D converter, inputting the digital signals in parallel to the shift register at predetermined locations, and then outputting the digital signals from the shift register in series at a high speed. Not only digital audio signals but also control data and data comprising computer software can be multiplexed by the CADA encoders in this manner.

The audio signals delivered to the output terminals L, R and A of the controller 5 are supplied to the encoder 6. The audio signals delivered to the output terminals L, R and A of the VTRs 1c and 1d are also supplied to the encoder 6. The audio signals delivered to the output terminals L and R of the tuner 2 and the output terminal A of the still picture reproducing apparatus 3 are also supplied to the encoder 6. The audio signals delivered to the six pairs of output terminals L and R of the audio reproducing apparatus 4a and to the six pairs of output terminals L and R of the audio reproducing apparatus 4b are supplied to the encoders 6 and 7 through the controller 5.

When one of the override key 5d, the announce key 5c, and the pause keys 5e to 5g of the controller 5 is pressed, the controller 5 generates control data $SC_1$ having contents corresponding to the pressed key. The control data $SC_1$ is supplied to the encoder 6.

The encoder 6 has output terminals A to E from each of which a pause control signal is output in response to the control data $SC_1$. The VTRs 1b to 1d and the audio reproducing apparatus 4a and 4b are respectively controlled by the pause signals delivered from the terminals A to E of the encoder 6. More specifically, when

3

the override key 5d and the announce key 5c are pressed, the pause control signal is output from all of the terminals A to E, so that the VTRs 1b to 1d and the audio reproducing apparatus 4a and 4b all enter a pause mode. When the pause keys 5e to 5g are pressed, pause control signals are output from the output terminals A to C, placing the respective VTRs 1b to 1d into a pause mode.

A master controller 8 is provided, comprising a computer (not shown) which controls the overall system, and which is preferably located in the cabin of the aircraft. The master controller 8 is connected to a display 81 and a keyboard 82. The master controller 8 generates control data $SC_2$ (for controlling one or more terminal apparatus units located in the receiving side of the system) in response to a command from the keyboard 82 and supplies control data $SC_2$ to the encoder 6. The control data $SC_2$ may be, for example, data for controlling the luminance of a display in the terminal apparatus, or data for polling the conditions of each passenger seat at which a terminal apparatus is located. The data can be monitored by the display 81 connected to the master controller 8.

Menu data is written in a ROM 9a, and a different set of game data is written in each of ROMs 9b to 9h. Each data signal SD read out from the ROMs 9a to 9h (for example, for use with computer software) is supplied to a signal processing circuit 10 in which, for example, an error correcting code may be added, and is supplied to the encoder 7 thereafter.

Control data signals $SC_1$ and $SC_2$ are also supplied to the encoder 7 from the encoder 6.

A time-division-multiplexed signal $S_{CA1}$ appears at an output terminal 0 of the encoder 6. The signal $S_{CA1}$ includes the plurality of digitally converted audio signals generated in the encoder 6, and the control data $SC_1$ and $SC_2$ supplied to the encoder 6. The signal $S_{CA1}$ is supplied to a modulator 11f to be amplitude-modulated, preferably by a VSB (vestigial sideband) system.

A time-division-multiplexed signal $S_{CA2}$ appears at an output terminal 0 of the encoder 7. The signal $S_{CA2}$ includes the plurality of digitally converted audio signals generated in the encoder 7, the control data ($SC_1$ and $SC_2$) and the signal SD supplied to the encoder 7. The signal $S_{CA2}$ is supplied to a modulator 11g to be amplitude-modulated, preferably by a VSB system.

The video signal delivered to the output terminal V of the controller 5 is supplied to a modulator 11a. The audio signal delivered to the terminal A of the controller 5 is supplied both to the modulator 11a and to the encoder 6. In the modulator 11a, an ordinary television signal is generated by frequency modulating the audio signal and frequency-multiplexing the frequency modulated audio signal with the video signal. This television signal is thereafter amplitude-modulated, preferably by a VSB system.

The video signals delivered to the respective output terminals V of the VTRs 1c, 1d, the tuner 2, and the still picture reproducing apparatus 3 are respectively supplied to modulators 11b to 11e to be amplitude-modulated, preferably by a VSB system.

The modulators 11a to 11g modulate the signals supplied thereto in frequency bands chosen so as to prevent cross modulation, such as in every other channel above the sixty channels of the television broadcasting band.

Output signals from the modulators 11a to 11g are supplied to an adder 12 in which they are frequency-multiplexed. The frequency multiplexed signal $S_{MF}$ from the adder 12 is supplied through a signal distributor 13 to one end of a leaky cable 21. The cable 21 serves as a bi-directional signal transmission means. The other end of the cable 21 terminates at a terminal resistor 22. A coaxial cable whose periphery is spirally indented so as to leak a large proportion of transmitted signals is suitable for use as the cable 21.

The receiving side of the system will next be described.

Figure 1 shows a terminal apparatus unit 30, of the type that preferably is to be mounted on the back of one of a plurality of passenger seats in an aircraft. Although only one terminal apparatus unit 30 is illustrated in Figure 1, there will preferably be the same number of terminal units 30 as there are passenger seats in the aircraft. Each terminal apparatus unit 30 is provided with an antenna 31 which receives the frequency multiplexed signal $S_{MF}$ leaking from the cable 21. The frequency-multiplexed signal $S_{MF}$ received at the antenna 31 is supplied through a signal distributor 32 to a television tuner 33 and a CADA tuner 34. The tuner 33 is capable of selectively receiving channels in the output frequency bands of the modulators 11a to 11e, while the tuner 34 is capable of selectively receiving channels in the output frequency bands of the modulators 11f and 11g. The tuners 33 and 34 are controlled in their channel selections by a selection and display apparatus 35.

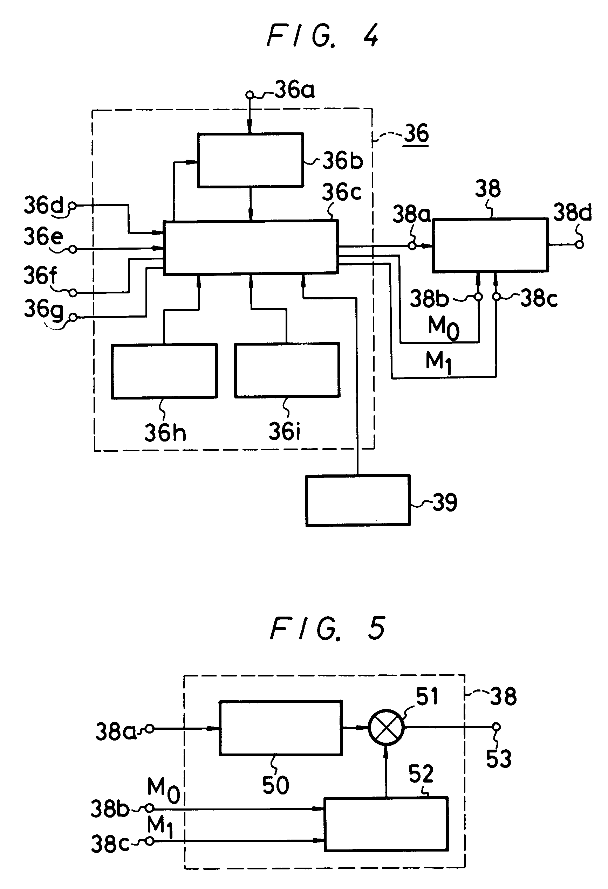

Video and audio signals produced by the tuner 33 are supplied to the selection and display apparatus 35, and the time-division-multiplexed signal $S_{CA1}$ or $S_{CA2}$ produced by the tuner 34 is supplied to a CADA decoder 36. The CADA decoder 36 is constructed so as to effect substantially the inverse operations to those performed in the CADA encoders 6 and 7. More specifically, the CADA decoder 36 decodes the time-division-multiplexed signal $S_{CA1}$ (or $S_{CA2}$) or CADA data, produces a desired demultiplexed signal, and supplies the same to the selection and display apparatus 35 or to a personal computer 37. An embodiment of the decoder 36 is described in the above-referenced US Patent No. US-A-4 684 981, and a preferred embodiment will be described below with reference to Figure 4.

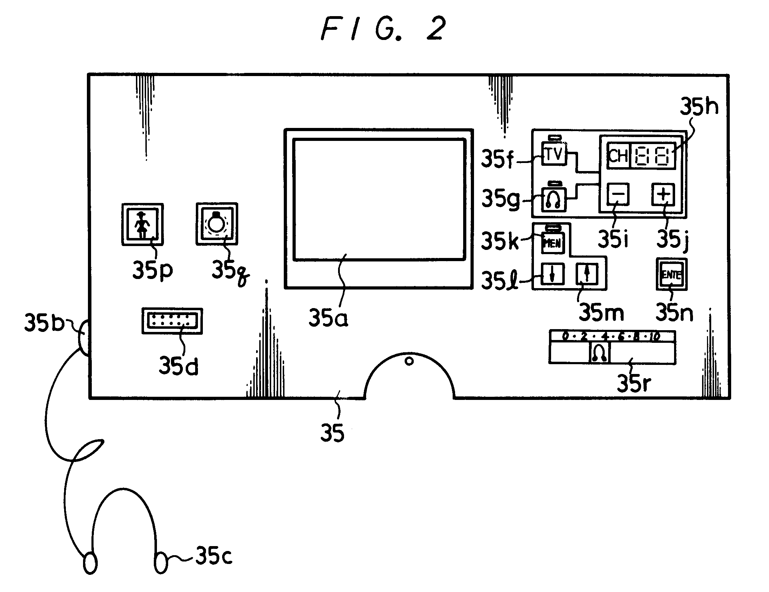

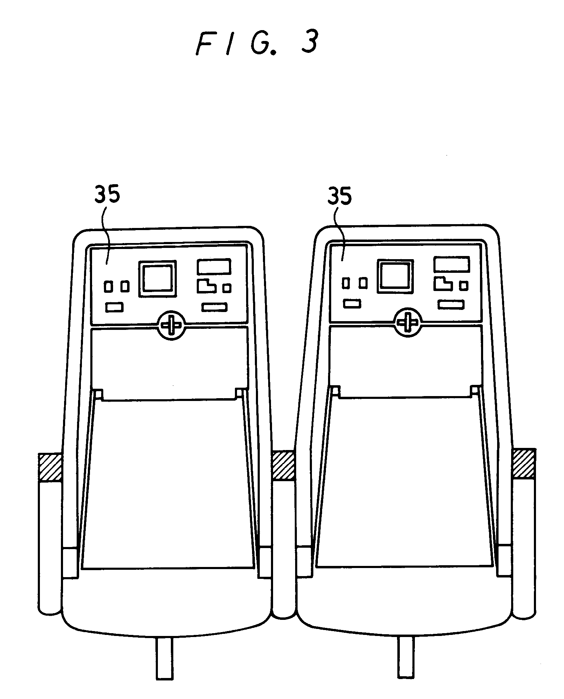

Figure 2 is an example of a preferred arrangement of the panel of the selection and display apparatus 35. The panel of the selection and display apparatus 35 may be mounted on the back of a passenger seat, as shown in Figure 3.

Figure 2 shows a display 35a, which may comprise a flat cathode ray tube or an LCD (liquid crystal display) or the like, an audio output terminal 35b for connecting a pair of headphones 35c thereto, and a game terminal 35d for connecting a joy stick 35e (shown in Figure 1), a keyboard (not shown) or the like for playing games.

Further, the selection and display apparatus 35 is provided with a television selecting key 35f, a music selecting key 35g, a channel display 35h, a channel-down key 35i and a channel-up key 35j.

The television channel can be sequentially changed by first pressing the television selecting key 35f and then pressing the channel-down key 35i or the channel-up key 35j. Thus, when the channel received by the television tuner 33 is changed sequentially, the display 35a sequentially displays images reproduced from the video signals derived from the VTRs 1b to 1d, the tuner 2 and the still picture reproducing apparatus 3, and corresponding audio signals from the CADA decoder 36 are output to the audio output terminal 35b. When the audio signal is bi-lingual, two audio channels are assigned for one video display. A first language is supplied from the first channel, and a second language from the second channel.

The music channel can be sequentially changed by first pressing the music selecting key 35g and then pressing the channel-down key 35i or the channel-up key 35j. In this manner, the audio signal output from the CADA decoder 36 is changed, and the audio signals output from the audio reproducing apparatus 4a and 4b are sequentially supplied to the audio signal output terminal 35b.

The selection and display apparatus 35 is also provided with a menu display key 35k, a cursor-down key 35l, a cursor-up key 35m and an enter key 35n. By pressing the menu key 35k, a video signal based on data from the menu ROM 9a is supplied to the selection and display apparatus 35 from the personal computer 37 and a menu is displayed on the display 35a.

By pressing the enter key 35n after selecting a game by moving a cursor on the display with the cursor-down key 35l or the cursor-up key 35m, a video signal and an audio signal based on data of the selected game from the game ROMs 9b to 9h are supplied from the personal computer 37 to the selection and display apparatus 35. Then, the game is displayed on the display 35a and the game sound signal is supplied to the audio output terminal 35b.

The selection and display apparatus 35 also includes an attendant call key 35p, a reading light key 35q and a volume control 35r.

The frequency-multiplexed signal $S_{MF}$ including the control data $SC_2$ delivered from the master controller 8 through the CADA encoder 6 to the cable 21 is received by the antenna 31 of each terminal unit 30 and supplied to the CADA tuner 34 of the unit 30, and when the CADA tuner 34 receives the aforementioned signal $S_{CA1}$ (which is the CADA data from the frequency-multiplexed signal $S_{MF}$) the CADA tuner 34 supplies the same to the CADA decoder 36.

The CADA decoder 36 is preferably constructed as shown in Figure 4. When the CADA decoder 36 is supplied with the signal $S_{CA1}$ from the CADA tuner 34, the signal $S_{CA1}$ is supplied through a CADA data input terminal 36a to a decoding section 36b. The decoding section 36b decodes predetermined necessary data from the CADA data in accordance with a command from a microcomputer 36c provided in the decoder 36 (or a command included in the CADA data) and supplies the same to the microcomputer 36c.

The microcomputer 36c is also supplied with a selection signal indicative of operation of one of the keys of the selection and display apparatus 35 through a selection signal input terminal 36d and a game data selection signal included in the CADA data from the personal computer 37 through a game selection signal input terminal 36e.

The microcomputer 36c supplies various decoded data signals (such as audio signals) through an output terminal 36f to the selection and display apparatus 35 and decoded game data signals through an output terminal 36g to the personal computer 37.

The CADA decoder 36 contains an address generator 36h and a seat ID (identity) memory section 36i. The address generator 36h supplies the microcomputer 36c with information indicative of the location of a seat at which the terminal unit 30 is installed (or a seat at which a passenger who is using the terminal unit 30 is sitting). The seat ID memory section 36i supplies the microcomputer 36c with information relating to the seat at which the terminal unit 30 is installed (or the seat at which a passenger who is using the terminal unit 30 is sitting), such as the date of manufacture and the model number thereof, or the like.

The microcomputer 36c is connected to a sensor 39 (also shown in Figure 1) which detects conditions of the seat, such as whether the seat belt is fastened and at which position the seat is reclined, and supplies the detected data to the microcomputer 36c.

The CADA decoder 36 can transmit predetermined signals through a transmitter 38 to the master controller 8 of the central control apparatus. The transmitter 38 is provided with a transmitted signal input terminal 38a for receiving signals from the CADA decoder 36, and first and second change-over signal input terminals 38b, 38c which receive change-over signals from the CADA decoder 36. The transmitter 38 can be operated in two transmission modes, that is, a polling transmission mode and a random access transmission mode, to be discussed below. The transmitter 38 multiplexes signals fed to the input terminal 38a with a predetermined carrier in response to signals fed thereto through the change-over signal input terminals 38b and 38c, and supplies the muliplexed signal to an output terminal 38d.

Figure 5 is a preferred embodiment of the transmitter 38. A transmitted signal supplied from the CADA decoder 36 to the transmitted signal input terminal 38a is supplied to a modulator 50. The modulator 50, which modulates the signal received at the input terminal 38a to an FSK (frequency shift key) signal for transmission, supplies its output signal to a multiplexer 51. The multiplexer 51 multiplexes the transmitted signal from the modulator 50 with a carrier generated by an oscillator 52 and modulates the transmitted signal.

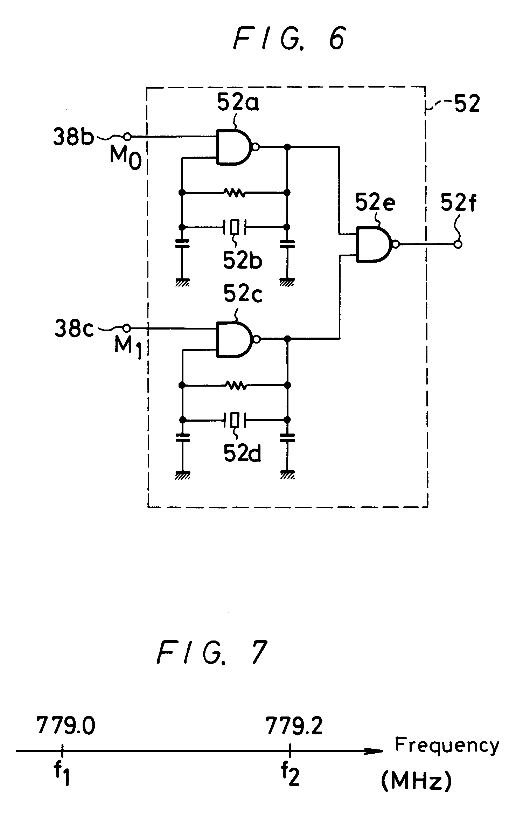

The oscillator 52, which is preferably constructed as shown in Figure 6, is supplied with a first signal (determined in accordance with Table 1, see below) from the CADA decoder 36 through the terminal 38b in the random access transmission mode, and with a low level signal "0" from the CADA decoder 36 through the terminal 38c during the polling transmission mode. The terminal 38b is connected to one input terminal of a first NAND gate circuit 52a. The other input terminal of the circuit 52a and an output terminal of the circuit 52a are connected together through a first quartz oscillator 52b. The first quartz oscillator 52b generates a 779.0 MHz carrier for the above-mentioned random access transmission. The terminal 38c is connected to one input terminal of a second NAND gate circuit 52c. The other input terminal of the circuit 52c and an output terminal of the circuit 52c are connected together through a second quartz oscillator 52d. The second quartz oscillator 52d generates a 779.2 MHz carrier for the above-mentioned polling transmission. The output terminals of the first and second NAND gate circuits 52a, 52c are respectively connected to first and second input terminals of a third NAND gate circuit 52e. An output terminal of the third NAND gate circuit 52e is connected to the output terminal 52f of the oscillator 52.

By constructing the oscillator 52 in this manner, an oscillating signal corresponding to a carrier for random access transmission (produced by the first quartz oscillator 52b) is fed to the output terminal 52f when the terminal 38b is supplied with a high level signal, and an oscillating signal corresponding to a carrier for polling transmission (produced by the second quartz oscillator 52d) is fed to the output terminal 52f when the terminal 38c is supplied with a high level signal. Therefore, the signal supplied to the multiplexer 51 from the oscillator 52 is automatically changed over to the carrier signal for random access transmission or that for polling transmission in response to signals supplied from the CADA decoder 36 to the terminals 38b and 38c to cause the multiplexer 51 to effect modulations appropriate to the selected transmission mode.

Referring back to Figure 4, the change-over signals supplied from the CADA decoder 36 to the first and second change-over signal input terminals 38b, 38c are generated by the microcomputer 36c on the basis of a polling flag included in the CADA data, which polling flag is transmitted from the central control unit and decoded by the decoding section 36b of the CADA decoder 36. The polling flag included in the CADA data, which indicates whether or not polling transmission is to be carried out, is set to the high level "1" when the polling transmission is to be effected, and to the low level "0" when the polling transmission is not to be effected. The microcomputer 36c detects or judges the value of the polling flag and supplies the change-over signal corresponding to the detected value. The change-over signals from the microcomputer 36c depend upon the seat position information supplied to the microcomputer 36c from the address generator 36h. In the Figure 4 embodiment, one address is assigned for each terminal unit 30 serving an even numbered seat, and another for each terminal unit 30 serving an odd numbered seat. The microcomputer 36c outputs the change-over signals as shown in the following Table 1. In Table 1, $M_0$ designates the change-over signal fed to the first change-over signal input terminal 38b, and $M_1$ designates the change-over signal fed to the second change-over signal input terminal 38c.

## Table 1

| Polling Flag | $M_0$ | $M_1$ | Transmission From Terminal Unit |
|---|---|---|---|
| "0" | "0" | "0" | No transmission |
| | "1" | "0" | Random Access Transmission (Odd No. Seats) |
| | "0" | "1" | Random Access Transmission (Even No. Seats) |
| "1" | "0" | "0" | No Transmission |
| | "1" | "0" | Random Access Transmission (All Seats) |
| | "0" | "1" | Polling Transmission (All Seats) |

The change-over signals are transmitted from the microcomputer 36c of the CADA decoder 36 to the transmitter 38 as described above. In the embodiment of Figures 4 to 6, when only the change-over signal $M_0$ delivered to the first input terminal 38b is at the high level "1", a frequency $f_1$ (779.0 MHz as shown in Figure 7) is selected for the carrier. However, when only the change-over signal $M_1$ delivered to the second input terminal 38c is at the high level "1", a frequency $f_2$ (779.2 MHz) is selected for the carrier. The signal to be transmitted is multiplexed with the carrier in the transmitter 38 and is supplied from the output terminal 38d of the transmitter 38 through the signal distributor 32 to the antenna 31. Further, the signal is transmitted from the antenna 31 through the cable 21 to the central control unit.

The signal supplied from the terminal unit 30 to the central control unit is separated by the signal distributor 13 from the other signals received from the cable 21, and is supplied to a demodulator 43 which demodulates the transmitted signal and supplies the same to the CADA encoder 6. The CADA encoder 6 then supplies the master controller 8 with data on the basis of the transmitted signal from the terminal unit 30.

Reference is next made to the polling transmission mode, in which signals from the respective terminal units 30 are supplied to the central control unit under the control of the central control unit.

In a preferred embodiment, polling transmission is effected when the operator of the master controller 8 in the central control unit enters appropriate commands for monitoring the condition of one or more of the terminal units 30 or one or more seats. Let it now be assumed that the master controller 8 is required, for example, to monitor whether passengers in respective seats have fastened their seat belts or not. In this case, the master controller 8 supplies the CADA encoder 6 with the control data $SC_2$ for requiring each terminal unit 30 to transmit seat belt status information, in response to the corresponding command entered on the keyboard 82. Since the master controller 8 cannot simultaneously accept the responses from all the terminal units, the master controller 8 outputs the control data $SC_2$ sequentially in the order of the addresses assigned to each terminal unit 30 to be polled. If there are, for example, 150 passengers in the aircraft, the master controller 8 outputs the control data $SC_2$ 150 times, addressing all of the 150 seats sequentially in the order of the addresses. The control data $SC_2$ includes the aforementioned polling flag.

The control data $SC_2$ is supplied to the CADA encoder 6 to be time-division-multiplexed with other signals (such as audio signals) as mentioned above for transmission as the signal $S_{CA1}$. The signal $S_{CA1}$ as the CADA data is supplied through the cable 21 to the respective terminal units 30. When the signal $S_{CA1}$ is supplied to a particular terminal unit 30, it is decoded by the decoding section 36b of the CADA decoder 36 in the terminal unit 30, and the microcomputer 36c evaluates the control data $SC_2$ in the decoded CADA data. When the address specified by the control data $SC_2$ coincides with the address of the terminal unit 30 supplied from the address generator 36h, the microcomputer 36c of the terminal unit 30 supplies the transmitted signal input terminal 38a of the transmitter 38 with an information signal indicating whether the seat belt is fastened, as instructed by the control data $SC_2$. This information signal is supplied from the sensor 39 to the microcomputer 36c. In the polling transmission mode, the first and second change-over signal input terminals 38b, 38c of the transmitter 38 are supplied with the low level signal "0" and the high level signal "1", respectively. By thus supplying the change-over signals, the information signal to be transmitted (indicating whether the seat belt is fastened), is multiplexed with the carrier $f_2$ (779.2 MHz) and supplied to the output terminal 38d of the transmitter 38. The information signal is then supplied from the output terminal 38d through the signal distributor 32 and the antenna 31 to the cable 21. The information signal is then supplied from the cable 21 through the signal distributor 13, the demodulator 43 and the CADA encoder 6 to the master controller 8. When the seat belt information signal is supplied to the master controller 8, the master controller 8 outputs the control data $SC_2$ for requiring a similar information signal on another seat belt, specifying another seat address. Thus, the master controller 8 sequentially outputs control data signals $SC_2$ requiring seat belt information to all terminal units 30 of interest.

As described above, all terminal units 30 (each corresponding to a different seat) are instructed to transmit seat belt status information to the master controller 8. It is therefore possible to monitor in the master controller 8 passengers who have their seat belts fastened and those have not fastened their seat belts by displaying the seat belt status information received from the terminal units 30 on the display 81 (which may be in the form of a cathode ray tube). The time period necessary for this operation (that is, the period from the time that the master controller 8 supplies the first signal to the time that the master controller 8 has received all the answers) is very short so that the polling transmission can be carried out quickly for as many as 150 terminal units 30. The above-described example is for the case where the information monitored by the master controller 8 indicates whether or not each seat belt is fastened. In addition or as an alternative to this information, the master controller 8 is capable of collecting and monitoring a variety of information signals which can be detected by the microcomputer 36c, for example, regarding the reclining conditions of the respective seats detected by the sensor 39, channels selected for display on the display 35a of the selection and display apparatus 35, food menus selected by the cursor keys, articles sold in the cabin also selected by the cursor keys, and the like.

Next, reference is made to the random access transmission mode in which the central control unit is supplied with such signals as may be generated at any of the respective terminal units 30.

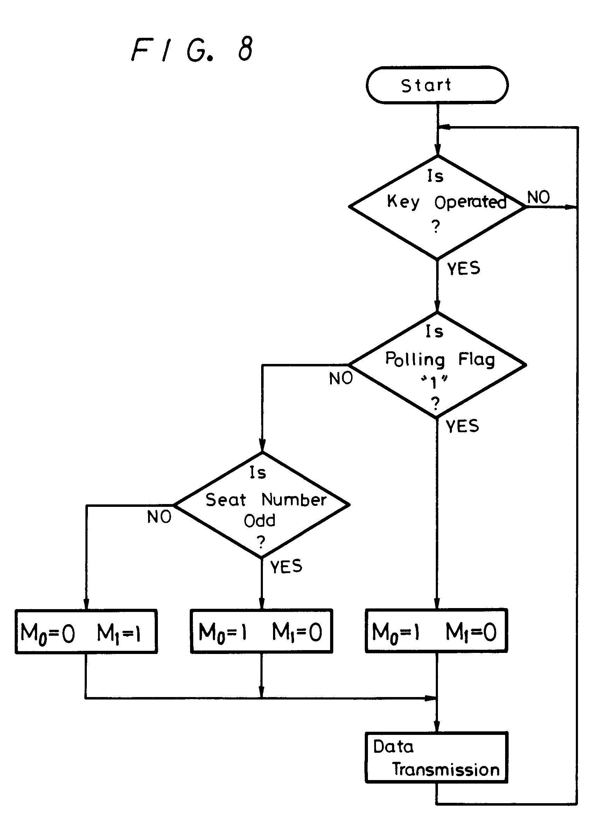

Random access transmission is effected when the attendant call key 35p or the reading light key 35q on the selection and display apparatus 35 is pressed. When the attendant call key 35p is pressed, an attendant call signal is supplied from the selection and display apparatus 35 through the input terminal 36d to the microcomputer 36c of the CADA decoder 36. When the attendant call signal is supplied to the microcomputer 36c, this attendant call signal and the address signal of the seat generated from the address signal generator 36h are supplied to the transmission signal input terminal 38a of the transmitter 38 as a signal to be transmitted. This signal is multiplexed with the carrier $f_1$ or $f_2$ (corresponding to the signals delivered to the change-over signal input terminals 38b and 38c) to generate a transmitting signal, and this transmitting signal is supplied to the output terminal 38d of the transmitter 38. The selection of the carrier $f_1$ or $f_2$ depends on the change-over signals $M_0$ and $M_1$ generated by the microcomputer 36c. The values of the change-over signals $M_0$ and $M_1$ are determined by a flowchart as shown in Figure 8 which will hereinafter be explained in detail. When the attendant call key 35p is pressed and the random access transmission is then carried out, the attendant call signal is checked whether the polling flag included in the CADA data is at the high level signal "1" (indicating that the polling transmission is being effected) or not. If the answer is affirmative or yes (the polling flag is equal to "1"), the change-over signal $M_0$ is set to the high level signal "1" and the change-over signal $M_1$ to the low level signal "0". These change-over signals $M_0$, $M_1$ are then supplied to the transmitter 38. By supplying the transmitter 38 with the change-over signals $M_0$, $M_1$ thus set, the attendant call signal to be transmitted is multiplexed with the carrier $f_1$ and then delivered to the output terminal 38d. The random access transmission is effected in a different band (carrier $f_1$) from the band for the polling transmission (carrier $f_2$) by selecting the carrier $f_1$ as described above.

On the other hand, when the polling flag shows the low level signal "0" (the system is not in the polling transmission mode), the microcomputer 36c evaluates the address signal from the address generator 36h. If the seat number is odd, the change-over signals $M_0$, $M_1$ are set to the high level signal "1" and the low level signal "0" respectively, as shown in Figure 8 and Table 1, and supplied to the transmitter 38. By thus supplying the change-over signals $M_0$, $M_1$, the signal to be transmitted is multiplexed with the carrier $f_1$ and delivered to the output terminal 38d, in the same manner as the case when the random access transmission is effected in the polling transmission mode.

When the polling flag shows the low level signal "0" and the seat number indicated by the address signal from the address generator 36h is even, the change-over signals $M_0$, $M_1$ are set to the low level signal "0" and the high level signal "1", respectively, as shown in Figure 8 and Table 1, and are supplied to the transmitter 38. By thus supplying the change-over signals $M_0$, $M_1$, the signal to be transmitted is multiplexed with the same carrier $f_2$ used for the polling transmission and delivered to the output terminal 38d.

The attendant call signal processed as described above is supplied from the output terminal 38d through the signal distributor 32 and the antenna 31 to the cable 21. Then, from the cable 21, the attendant call signal is delivered through the signal distributor 13 and the demodulator 43 to the CADA encoder 6 of the central control unit. A switch box 40 is controlled by a CPU (not shown) in the CADA encoder 6 on the basis of this attendant call signal to light an attendant call lamp 41 corresponding to the seat indicated by the address signal.

When the reading light key 35q of a particular selection and display apparatus 35 is pressed, random access transmission is effected with one of the carriers $f_1$ and $f_2$ selected in the same manner as described above with reference to the attendant call signal transmission. In response to receipt of the transmitted signal, the switch box 40 is controlled by the CPU in the CADA encoder 6 to light a reading lamp 42 corresponding to the seat indicated by the transmitted address signal.

As described above, each random access transmission request is delivered immediately from the terminal unit 30 to the central control unit, so that a response can be quickly made. Moreover, in a preferred embodiment, either of two transmission channels (namely one using the carrier $f_1$ and the other using the carrier $f_2$) is employed according to the seat number when the polling transmission is not being effected. Accordingly, even if a random access transmission is effected simultaneously from an odd numbered seat and an even numbered seat, the instruction signals from the two seats are accurately delivered to the central control unit since these two signals are transmitted through different channels. The provision of two transmission channels increases the quantity of data that may be transmitted in the random access transmission mode and facilitates quick turn-on of the attendant call lamp 41 and the reading lamp 42. However, if command signals are transmitted in the random access mode substantially simultaneously from two or more even numbered (or odd numbered) seats, the plurality of signals from the seats will likely interfere in the same channel and hence be disturbed so that the commands cannot be transmitted to the central control unit. To avoid this problem, retransmission is carried out or these signals are repeatedly transmitted for a predetermined time period until they are respectively received by the central control unit. Either operation can be quickly performed. In the above-described preferred embodiment, half the seats are assigned to each channel so that the possibility of simultaneous transmissions in one channel is decreased by fifty percent. Thus, the retransmission of data is also reduced by fifty percent, and the average transmission time is accordingly reduced.

In the above-described preferred embodiment, when polling transmission is not being effected, the polling transmission channel is used as a second random access transmission channel. Thus, the transmitter 38 need not be complicated. In practice, the system will likely be operated in the polling transmission mode for only a short time relative to the time in which it is operated in the random access transmission mode, so that two channels can be used for random access transmission for most of the time.

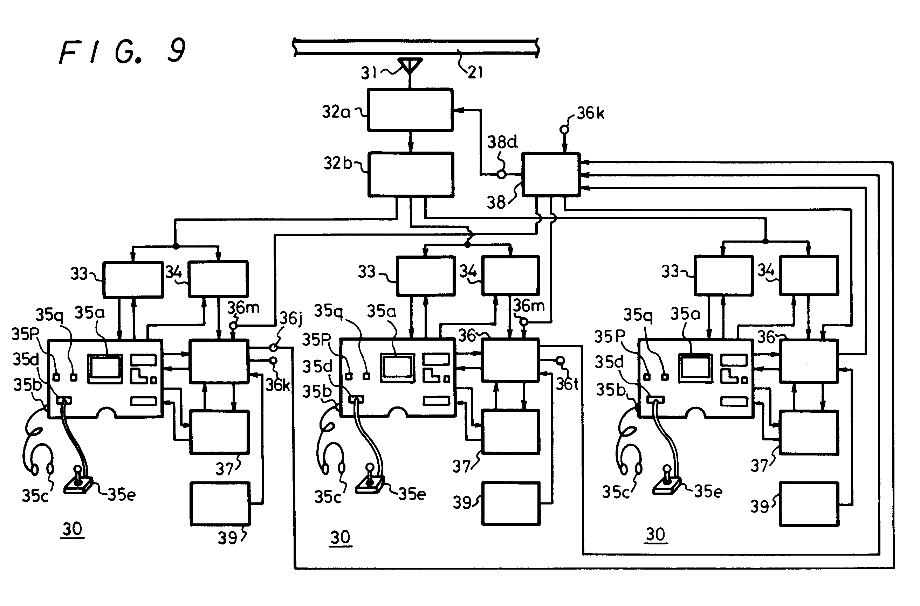

Figure 9 is another preferred embodiment of the present invention in which each transmitter 38 and signal distributor 32 is shared by three terminal units 30, and the signal distributor 32 comprises both a signal distributor 32a and a distributor 32b. The remaining system components correspond to those in Figure 1, and are designated by the same reference numerals. Explanation thereof will be omitted.

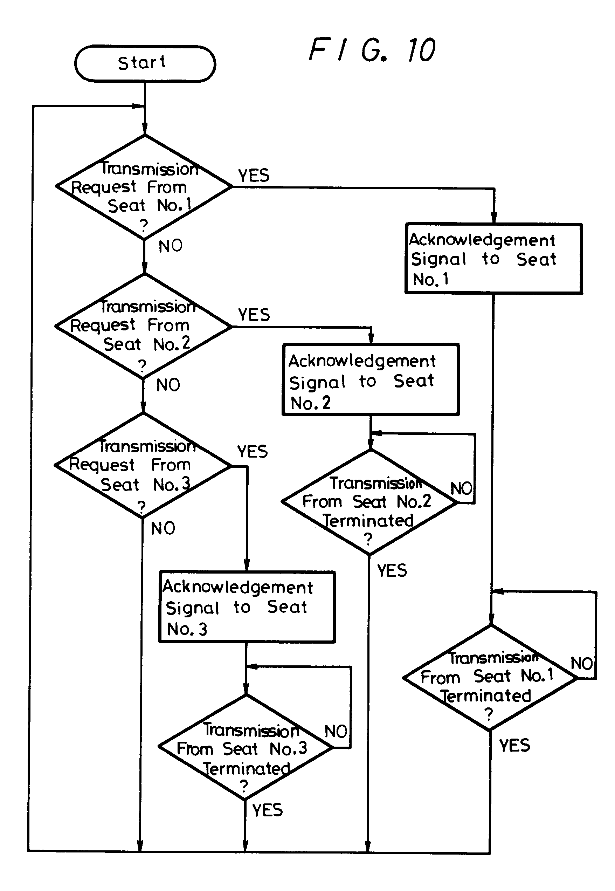

Operation of the Figure 9 embodiment will next be described with reference to the flowchart of Figure 10.

The three seats which share the single transmitter 38 shall be designated as seats No. 1, No. 2 and No. 3. In the Figure 9 embodiment, the microcomputer within the transmitter 38 sequentially monitors transmission request signals supplied from the terminal units 30 of each of the seats No. 1, No. 2 and No. 3. For example, if the microcomputer is supplied with a high level ("1") transmission request signal from the first output terminal 38b of the terminal unit 30 for seat No. 1, the microcomputer returns an acknowledgement signal back to the CADA decoder 36 of the terminal unit 30 for seat No. 1 through the input terminal 36a. The CADA decoder 36, upon receiving the acknowledgement signal, supplies a signal to be transmitted through the output terminal 38a to the transmitter 38. Since the transmission request signal (the high level signal "1" from the terminal 36b) indicates random access transmission, the transmitter 38 multiplexes this transmission request signal with the aforementioned carrier $f_1$ and then transmits the multiplexed signal from the output terminal 38d through the signal distributor 32a, the antenna 31 and the cable 21 to the central control unit. During the transmission, the CADA decoder 36 continues to supply the transmission request signal (the high level signal "1") to the transmitter 38. Even if the terminal unit 30 for seat No. 2 or 3 supplies a transmission request signal while the terminal unit 30 for seat No. 1 is transmitting the signal, the microcomputer in the transmitter 38 does not supply the terminal unit 30 for seat No. 2 or 3 with an acknowledgement signal until the terminal unit 30 for seat No. 1 terminates its transmission operation.

When the transmitter 38 receives a low level ("0") transmission request signal (which indicates termination of a transmission), from the terminal unit for seat No. 1, the microcomputer in the transmitter 38 resumes sequentially monitoring the transmission request signals from the terminal units 30 of all three of the seats Nos.

1, 2 and 3. If the microcomputer detects that the terminal unit 30 of the seat No. 2 or 3 is supplying the high level signal "1", the microcomputer supplies the CADA decoder 36 for that unit with the acknowledgement signal in the same manner as described above and carries out the transmission.

It will be understood from the explanation given above that signal transmission from a set of three seats Nos. 1, 2 and 3 is effected by a single transmitter 38 so that the required number of transmitters 38 and antennae 31 is one third of the required number of terminal units 30, and accordingly the construction of the transmission apparatus can be simplified. In the embodiment described above, the microcomputer in the transmitter 38 monitors the transmission request signals from the seats Nos. 1, 2 and 3 in sequence. However, in an alternative embodiment, a particular priority may be determined among the three seats.

In the embodiment described above with reference to Figures 9 and 10, since each transmitter 38 is used in common by three terminal units 30, it is not possible to effect transmissions simultaneously from the three seats. Even if keys are operated simultaneously in the terminal units 30 of each of seats Nos. 1, 2 and 3, the transmissions are effected in sequence. Thus, the probability that random access signals from a plurality of seats will interfere in the cable is reduced to approximately one third, and retransmission and the average time required for transmission are accordingly also reduced.

Although Figure 9 shows one transmitter used in common by three seats, alternatively each transmitter may be used in common by two, four, or more than four seats.

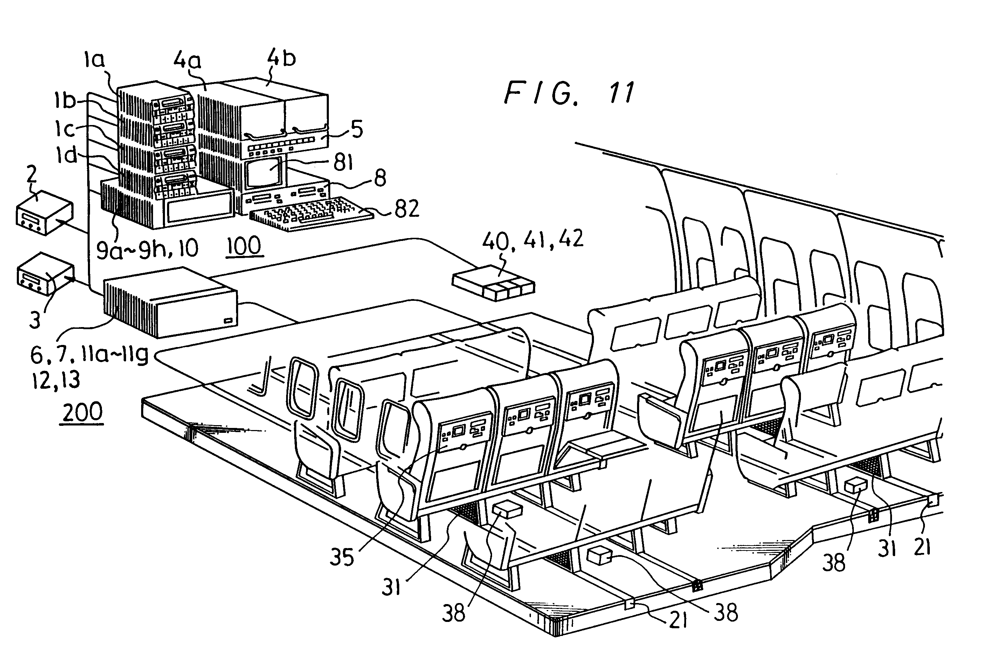

Figure 11 shows a preferred embodiment of the present invention when installed in a cabin of an aircraft. The parts in the Figure 11 system corresponding to those in Figure 1 are designated by the same reference numerals. In Figure 11, the ROMs 9a to 9h and the signal processing circuit 10 of Figure 1 are accommodated in a box 100, and the CADA encoders 6 and 7, the modulators 11a to 11g, the adder 12 and the signal distributor 13 are accommodated in a box 200. Transmitters 38 are shown disposed under respective seats adjacent the cable 21, and are each of the type shown in Figure 9.

According to the two way communication system as described above, two channels, that is, the polling channel and the random access channel, are provided between the central control unit and each terminal unit. When polling transmission is not effected, the polling channel is used for random access transmission, so that the number of random access channels is increased and accordingly more information can be transmitted in a shorter time.

The above embodiments have been described for the case where the system is installed in an aircraft. The system may instead be implemented in a different passenger vehicle such as a train or a bus, or in a building or complex such as a theatre, a stadium, or the like, in the same manner as described above.

## Claims

1. A two way communication system comprising:

   a head end apparatus comprising means (8) for generating a polling command signal (SC2), and means (43) for receiving a polling answer signal;

   a plurality of terminal units (30) each comprising means (36) for generating said polling answer signal in response to said polling command signal (SC2), and means (36) for generating a random access signal; and

   means (21,31,38) for sending in first and second channels ($f_1$,$f_2$) each said polling answer signal and each said random access signal to the head end apparatus, and for sending said polling command signal (SC2) from the head end apparatus to each terminal unit (30);

   characterised in that:

   each of said terminal units (30) includes means (36) for decoding said polling command signal; and

   said sending means (21,31,38) is responsive to said polling command signal decoding means (36) to send each said polling answer signal in said first channel ($f_1$) and at least one said random access signal in said second channel ($f_2$) when said polling command signal is supplied to said decoding means (36), and to send at least one said random access signal in said first channel ($f_1$) and at least another said random access signal in said second channel ($f_2$) when said polling command signal is not supplied to said decoding means (36).

2. A system according to claim 1, comprising an address generator means (36h) for supplying an address number for each terminal unit (30) to the sending means (21,31,38), and wherein the channel in which said sending means is operable to send each said random access signal depends on the address number obtained from said address generator means (36h).

3. A system according to claim 2, wherein said sending means (21,31,38) is operable to send each said random access signal in one of said first and second channels $(f_1,f_2)$ when said address number is an odd number and in another of said first and second channels when said address number is an even number.

4. A system according to any one of the preceding claims, wherein said sending means includes a transmitter (38).

5. A system according to claim 4, in which said transmitter (38) is shared by at least two of said terminal units (30).

6. A system according to any one of the preceding claims, for use with a plurality of passenger seats, each passenger seat being provided with an attendant call light (41) and a reading light (42), wherein each of said terminal units (30) is provided at a respective one of said passenger seats, and in which at least one of said terminal units (30) comprises means (39) for sensing the status of a first passenger seat, said status sensing means (39) being connected to said polling answer signal generating means (36), said polling answer signal being concerned with the status of said first passenger seat, and comprising key means (35p,35q) for generating an attendant call signal and for generating a reading light signal, said key means (35p,35q) being connected to said random access signal generating means (36) and said random access signal being concerned with said attendant call signal and said reading light signal.

7. A system according to claim 6, wherein said head end apparatus comprises means (1a to 1d) for generating video programmes, means (4a,4b) for generating audio programmes, and means (12) for multiplexing said polling command signal (SC2), said video programmes and said audio programmes, and wherein at least one of said terminal units (30) comprises means (33) for receiving said video programmes and audio programmes, means (35) for selecting desired ones of said video programmes and audio programmes, said selecting means (35) being connected to said polling answer signal generating means (36), means (35a) for displaying a selected video programme, an audio output terminal (35b) for receiving a selected audio programme, and a volume control (35r) for controlling the volume of the selected audio programme received at the audio output terminal (35b), said polling answer signal being concerned with selection of said video programmes and audio programmes.

8. A system according to claim 7, wherein said head end apparatus comprises memory means (9b to 9h) for storing television game software signals and said multiplexing means (12) is operable to multiplex said television game software signals with said polling command signals (SC2), said video programmes, and said audio programmes, and wherein at least one of said terminal units (30) comprises means (35k to 35m) for selecting desired ones of said television game software signals, and means (37) for processing said selected television game software signals, said processing means (37) being connected to said polling answer signal generating means (36), and wherein said polling answer signal is concerned with selection of said television game software signals.

9. A system according to any one of the preceding claims, wherein said sending means includes a cable (21) for transmitting said polling command signal (SC2), said polling answer signal, and said random access signal.

10. A system according to any one of the preceding claims, wherein said head end apparatus comprises display means (81) connected to said polling command generating means (8) for monitoring said polling answer signal and said random access signal.

11. A system according to any one of the preceding claims, wherein said head end apparatus comprises keyboard means (82) connected to said polling command generating means (8) for generating said polling command signal (SC2).

## Patentansprüche

1. Zweiwege-Kommunikationssystem
   mit einem Hauptendgerät, das mit Mitteln (8) zur Erzeugung eines Abfragesteuersignals (SC2) und mit Mitteln (43) zum Empfangen eines Abfrageantwortsignals ausgestattet ist,
   mit einer Mehrzahl von Anschlußeinheiten (30), die jeweils mit Mitteln (36) zur Erzeugung des Abfrageantwortsignals als Reaktion auf das Abfragesteuersignal (SC2) und mit Mitteln (36) zur Erzeugung eines wahlfreien Zugriffssignals ausgestattet sind,

sowie mit Mitteln (21, 31, 38) zum Aussenden der einzelnen Abfrageantwortsignale und der einzelnen wahlfreien Zugriffssignale über einen ersten und einen zweiten Kanal (f₁, f₂) zu dem Hauptendgerät und zum Aussenden des Abfragesteuersignals (SC2) von dem Hauptendgerät zu jeder Anschlußeinheit (30),

**dadurch gekennzeichnet,**

daß jede der Anschlußeinheiten (30) Mittel (36) zum Dekodieren des Abfragesteuersignals aufweist,

und daß die genannten Sendemittel (21, 31, 38) auf die Mittel (36) zum Dekodieren des Abfragesteuersignals in der Weise reagieren, daß sie jedes Abfrageantwortsignal in dem ersten Kanal (f₁) und wenigstens ein wahlfreies Zugriffssignal in dem zweiten Kanal (f₂) aussenden, wenn den Dekodiermitteln (36) das Abfragesteuersignal zugeführt wird, und daß sie wenigstens ein wahlfreies Zugriffssignal in dem ersten Kanal (f₁) und wenigstens ein weiteres wahlfreies Zugriffssignal in dem zweiten Kanal (f₂) aussenden, wenn den Dekodiermitteln (36) das Abfragesteuersignal nicht zugeführt wird.

2.   System nach Anspruch 1 mit einer Adressengeneratoreinrichtung (36h) zur Lieferung einer Adressennummer für jede Anschlußeinheit (30) an die Sendemittel (21, 31, 38), wobei der Kanal, in dem die Sendemittel die einzelnen wahlfreien Zugriffssignale aussenden, von der aus der Adressengeneratoreinrichtung (36h) gewonnenen Adressennummer abhängt.

3.   System nach Anspruch 2, bei dem die Sendemittel (21, 31, 38) so betrieben werden, daß sie jedes wahlfreie Zugriffssignal in einem der aus dem ersten und dem zweiten Kanal (f₁, f₂) bestehenden Kanäle aussenden, wenn die Adressennummer ungeradzahlig ist, und in dem anderen der aus dem ersten und dem zweiten Kanal (f₁, f₂) bestehenden Kanäle, wenn die Adressennummer geradzahlig ist.

4.   System nach einem der vorhergehenden Ansprüche, bei dem die Sendemittel einen Sender (38) umfassen.

5.   System nach Anspruch 4, bei dem der Sender (38) von wenigstens zwei der genannten Anschlußeinheiten (30) gemeinsam genutzt wird.

6.   System nach einem der vorhergehenden Ansprüche zur Verwendung im Zusammenhang mit mehreren Passagiersitzen, die jeweils mit einer Lampe (31) zum Herbeirufen des Bordpersonal und einer Leselampe (31) ausgestattet sind, wobei die einzelnen Anschlußeinheiten (30) an jeweils einem der Passagiersitze angeordnet ist und wobei wenigstens eine der Anschlußeinheiten (30) Sensormittel (39) zur Erfassung des Zustands eines ersten Passagiersitzes aufweist, die mit den Mitteln (36) zur Erzeugung des Abfrageantwortsignals verbunden ist, wobei sich das Abfrageantwortsignal auf den Zustand dieses ersten Passagiersitzes bezieht, und wobei Tasten (35p, 35q) zur Erzeugung eines Signals zum Herbeirufen des Bordpersonals und zur Erzeugung eines Leselampensignals vorgesehen sind, die (35p, 35q) mit den Mitteln (36) zur Erzeugung des wahlfreien Zugriffssignals verbunden sind, und wobei sich das wahlfreie Zugriffssignal auf das Signal zum Herbeirufen des Bordpersonals und auf das Leselampensignal bezieht.

7.   System nach Anspruch 6,
bei dem das Hauptendgerät aufweist:
- Mittel (1a bis 1d) zur Erzeugung von Videoprogrammen,
- Mittel (4a, 5b) zur Erzeugung von Audioprogrammen und eine Multiplexeinrichtung (12) zum Multiplexen des Abfragesteuersignals (SC2), der Videoprogramme und der Audioprogramme,
und bei dem wenigstens eine der Anschlußeinheiten (30) aufweist:
- Mittel (32) zum Empfangen der Videoprogramme und der Audioprogramme,
- mit den Mitteln (36) zur Erzeugung des Abfrageantwortsignals verbundene Auswahlmittel (35) zum Auswählen gewünschter Videoprogramme und Audioprogramme,
- Mittel (35a) zur Wiedergabe eines ausgewählten Videoprogramms,
- einen Audioausgangsanschluß (35b) zum Empfangen eines ausgewählten Audioprogramms und
- einen Lautstärkeregler (35r) zur Einstellung der Lautstärke des an dem Audioausgangsanschluß (35b) empfangenen ausgewählten Audioprogramms,
wobei sich das Abfrageantwortsignal auf die Auswahl der Video- und Audioprogramme bezieht.

8.   System nach Anspruch 7, bei dem das Hauptendgerät Speichermittel (9b bis 9h) zur Speicherung von

**12**

Fernsehspiele-Softwaresignalen aufweist und die Multiplexeinrichtung (12) eine Multiplexverknüpfung der Fernsehspiele-Softwaresignale mit den Abfragesteuersignalen (SC2), den Videoprogrammen und den Audioprogrammen bewirkt, und bei dem wenigstens eine der Anschlußeinheiten (30) Auswahlmittel (35k bis 35m) zum Auswählen gewünschter Fernsehspiele-Softwaresignale aufweist sowie Verarbeitungsmittel (37) zum Verarbeiten der ausgewählten Fernsehspiele-Softwaresignale, die mit den Mitteln zur Erzeugung der Abfrageantwortsignale verbunden sind, wobei sich das Abfrageantwortsignal auf die Auswahl der Fernsehspiele-Softwaresignale bezieht.

9.  System nach einem der vorhergehenden Ansprüche, bei dem die Sendemittel ein Kabel (21) zur Übertragung des Abfragesteuersignals (SC2), des Abfrageantwortsignals und des wahlfreien Zugriffssignals umfassen.

10. System nach einem der vorhergehenden Ansprüche, bei dem das Hauptendgerät mit den Mitteln (8) zur Erzeugung des Abfragesteuersignals verbundene Anzeigemittel (81) zur Überwachung des Abfrageantwortsignals und des wahlfreien Zugriffssignals aufweist.

11. System nach einem der vorhergehenden Ansprüche, bei dem das Hauptendgerät eine mit den Mitteln (8) zur Erzeugung des Abfragesteuersignals verbundene Tastatur (82) zur Erzeugung des Abfragesteuersignals (SC2) aufweist.

## Revendications

1.  Système de télécommunications bilatérales, comprenant:
    - un appareillage d'extrémité de tête comprenant des moyens (8) pour produire un signal de commande d'interrogation (SC2) et des moyens (43) pour recevoir un signal de réponse à une interrogation;
    - une pluralité d'unités terminales (30) comprenant chacune des moyens (36) pour produire ledit signal de réponse à une interrogation en réponse audit signal de commande d'interrogation (SC2), et des moyens (36) pour produire un signal d'accès aléatoire; et
    - des moyens (21, 31, 38) pour envoyer dans des première et deuxième voies ($f_1$, $f_2$) chacun desdits signaux de réponse à une interrogation et chacun desdits signaux d'accès aléatoire à l'appareillage d'extrémité de tête, et pour envoyer ledit signal de commande d'interrogation (SC2) de l'appareillage d'extrémité de tête à chaque unité terminale (30);
        caractérisé en ce que:
    - chacune desdites unités terminales (30) comporte des moyens (36) pour décoder ledit signal de commande d'interrogation; et
    - lesdits moyens pour envoyer (21, 31, 38) sont sensibles auxdits moyens de décodage (36) dudit signal de commande d'interrogation pour envoyer chaque signal de réponse à une interrogation dans ladite première voie ($f_1$) et au moins un desdits signaux d'accès aléatoire dans ladite deuxième voie ($f_2$) lorsque ledit signal de commande d'interrogation est fourni auxdits moyens de décodage (36), et pour envoyer au moins un desdits signaux d'accès aléatoire dans ladite première voie ($f_1$) et au moins un autre desdits signaux d'accès aléatoire dans ladite deuxième voie ($f_2$) lorsque ledit signal de commande d'interrogation n'est pas fourni auxdits moyens de décodage (36).

2.  Système selon la revendication 1, comprenant des moyens générateurs d'adresses (36h) pour fournir un numéro d'adresse pour chaque unité terminale (30) aux moyens pour envoyer (21, 31, 38), et dans lequel la voie dans laquelle lesdits moyens pour envoyer peuvent fonctionner pour envoyer chacun desdits signaux d'accès aléatoire dépend du numéro d'adresse obtenu desdits moyens générateurs d'adresses (36h).

3.  Système selon la revendication 2, dans lequel lesdits moyens pour envoyer (21, 31, 38) peuvent fonctionner pour envoyer chacun desdits signaux d'accès aléatoire dans une desdites première et deuxième voies ($f_1$, $f_2$) lorsque ledit numéro d'adresse est un nombre impair, et dans l'autre desdites première et deuxième voies lorsque ledit numéro d'adresse est un nombre pair.

4.  Système selon l'une quelconque des revendications précédentes, dans lequel lesdits moyens pour envoyer comprennent un émetteur (38).

5.  Système selon la revendication 4, dans lequel ledit émetteur (38) est partagé par au moins deux desdites unités terminales (30).

6. Système selon l'une quelconque des revendications précédentes, pour utilisation avec une pluralité de sièges de passagers, chaque siège de passager étant muni d'une lumière d'appel de personne de service (41) et d'une lumière de lecture (42), dans lequel chacune desdites unités terminales (30) est prévue à un siège respectif parmi lesdits sièges de passagers, et dans lequel au moins une desdites unités terminales (30) comprend des moyens (39) pour détecter l'état d'un premier siège de passager, lesdits moyens de détection d'état (39) étant connectés auxdits moyens générateurs de signal de réponse à une interrogation (36), ledit signal de réponse à une interrogation étant concerné par l'état dudit premier siège de passager, et comprenant des moyens à touche (35p, 35q) pour produire un signal d'appel de personne de service et pour produire un signal de lumière de lecture, lesdits moyens à touche (35p, 35q) étant connectés auxdits moyens générateurs de signal d'accès aléatoire (36), et ledit signal d'accès aléatoire étant concerné par ledit signal d'appel de personne de service et ledit signal de lumière de lecture.

7. Système selon la revendication 6, dans lequel ledit appareillage d'extrémité de tête comprend des moyens (1a à 1d) pour produire des programmes vidéo, des moyens (4a, 4b) pour produire des programmes audio, et des moyens (12) pour multiplexer ledit signal de commande d'interrogation (SC2), lesdits programmes vidéo et lesdits programmes audio, et dans lequel au moins une desdites unités terminales (30) comprend des moyens (33) pour recevoir lesdits programmes vidéo et programmes audio, des moyens (35) pour sélectionner des programmes désirés parmi lesdits programmes vidéo et programmes audio, lesdits moyens de sélection (35) étant connectés auxdits moyens générateurs de signal de réponse à une interrogation (36), des moyens (35a) pour afficher un programme vidéo sélectionné, un terminal de sortie audio (35b) pour recevoir un programme audio sélectionné, et une commande de volume (35r) pour régler le volume du programma audio sélectionné reçu par le terminal de sortie audio (35b), ledit signal de réponse à une interrogation étant concerné par la sélection desdits programmes vidéo et programmes audio.

8. Système selon la revendication 7, dans lequel ledit appareillage d'extrémité de tête comprend des moyens formant mémoire (9b à 9h) pour mémoriser des signaux de logiciel de jeux de télévision, et lesdits moyens multiplexeurs (12) peuvent fonctionner pour multiplexer lesdits signaux de logiciel de jeux de télévision avec ledit signal de commande d'interrogation (SC2), lesdits programmes vidéo et lesdits programmes audio, et dans lequel au moins une desdites unités terminales (30) comprend des moyens (35k à 35m) pour sélectionner des signaux désirés parmi lesdits signaux de logiciel de jeux de télévision et des moyens (37) pour traiter lesdits signaux de logiciel de jeux de télévision, lesdits moyens de traitement (37) étant connectés auxdits moyens générateurs de signal de réponse à une interrogation (36), et dans lequel ledit signal de réponse à une interrogation est concerné par la sélection desdits signaux de logiciel de jeux de télévision.

9. Système selon l'une quelconque des revendications précédentes, dans lequel lesdits moyens pour envoyer comportent un câble (21) pour transmettre ledit signal de commande d'interrogation (SC2), ledit signal de réponse à une interrogation et ledit signal d'accès aléatoire.

10. Système selon l'une quelconque des revendications précédentes, dans lequel ledit appareillage d'extrémité de tête comprend des moyens d'affichage (81) connectés auxdits moyens générateurs de commande d'interrogation (8) pour surveiller ledit signal de réponse à une interrogation et ledit signal d'accès aléatoire.

11. Système selon l'une quelconque des revendications précédentes, dans lequel ledit appareillage d'extrémité de tête comprend des moyens formant clavier (82) connectés auxdits moyens générateurs de commande d'interrogation (8) pour produire ledit signal de commande d'interrogation (SC2).

FIG. 1

EP 0 279 608 B1

FIG. 2

# F I G. 3

# FIG. 4

# FIG. 5

# FIG. 6

# FIG. 7

# F I G. 8

```
                                    ┌──────────┐
                                    │  Start   │
                                    └──────────┘
                                         │
                                         ▼
                                    ╱─────────╲
                                   ╱    Is     ╲        NO
                                  ╱ Key Operated ╲──────────→
                                   ╲     ?      ╱
                                    ╲─────────╱
                                         │ YES
                                         ▼
                                    ╱─────────╲
                                   ╱    Is     ╲
                    NO            ╱ Polling Flag ╲
              ←──────────────────  ╲    "1"    ╱
              │                      ╲    ?   ╱
              │                       ╲─────╱
              ▼                         │ YES
         ╱─────────╲                    │
        ╱    Is     ╲                   │
   NO  ╱ Seat Number ╲                  │
  ←────  ╲   Odd    ╱                   │
  │       ╲   ?   ╱                     │
  │        ╲─────╱                      │
  │          │ YES                      │
  ▼          ▼                          ▼
┌─────────┐ ┌─────────┐            ┌─────────┐
│M₀=0 M₁=1│ │M₀=1 M₁=0│            │M₀=1 M₁=0│
└─────────┘ └─────────┘            └─────────┘
                                        │
                                    ┌─────────┐
                                    │  Data   │
                                    │Transmiss│
                                    └─────────┘
```

$M_0=0 \quad M_1=1$

$M_0=1 \quad M_1=0$

$M_0=1 \quad M_1=0$

Data Transmission

F I G. 9

F I G. 10

Start

Transmission Request From Seat No.1 ?
— YES → Acknowledgement Signal to Seat No.1
NO ↓

Transmission Request From Seat No.2 ?
— YES → Acknowledgement Signal to Seat No.2
NO ↓

Transmission Request From Seat No.3 ?
— YES → Acknowledgement Signal to Seat No.3
NO ↓

Transmission From Seat No.2 Terminated ?
NO / YES

Transmission From Seat No.3 Terminated ?
NO / YES

Transmission From Seat No.1 Terminated ?
NO / YES

22

F I G. 11